(19) Europäisches Patentamt
European Patent Office
Office européen des brevets

(11) **EP 2 709 465 B1**

(12) **FASCICULE DE BREVET EUROPEEN**

(45) Date de publication et mention
de la délivrance du brevet:
**13.01.2016 Bulletin 2016/02**

(21) Numéro de dépôt: **12728710.0**

(22) Date de dépôt: **16.05.2012**

(51) Int Cl.:
*A23J 3/34* *(2006.01)*     *A23J 3/32* *(2006.01)*

(86) Numéro de dépôt international:
**PCT/FR2012/051107**

(87) Numéro de publication internationale:
**WO 2012/156645 (22.11.2012 Gazette 2012/47)**

(54) **PROCEDE INDUSTRIEL DE PREPARATION D'HYDROLYSATS ALCALINS DE PROTEINES VEGETALES**

GEWERBLICHES VERFAHREN ZUR ZUBEREITUNG ALKALIHYDROLYSATEN PFLANZLICHER PROTEINE

INDUSTRIAL PROCESS FOR THE PREPARATION OF ALKALINE HYDROLYSATES OF VEGETABLE PROTEINS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.05.2011 FR 1154241**

(43) Date de publication de la demande:
**26.03.2014 Bulletin 2014/13**

(73) Titulaire: **Roquette Frères**
**62136 Lestrem (FR)**

(72) Inventeurs:
• **DUVET, Sophie**
**F-59890 Quesnoy sur Deule (FR)**
• **DHALLEINE, Claire**
**F-60200 Compiegne (FR)**

(74) Mandataire: **Cabinet Plasseraud**
**52, rue de la Victoire**
**75440 Paris Cedex 09 (FR)**

(56) Documents cités:
**EP-A1- 1 327 390      WO-A1-2011/144856**
**GB-A- 705 489      JP-A- 2006 042 618**
**NL-A- 8 701 264      US-A- 2 522 050**

EP 2 709 465 B1

**Description**

La présente invention a pour objet un procédé industriel de préparation d'hydrolysats alcalins de protéines végétales.

Les protéines et les hydrolysats de protéines végétales ou animales sont fréquemment utilisés en tant qu'agents moussants dans les produits alimentaires, notamment en confiserie :

- les protéines en tant que telles, choisies comme agents moussants stables dans le temps,
- les hydrolysats de protéines, pour leur capacité moussante plus élevée que les protéines.

De nombreux documents décrivent les propriétés moussantes des hydrolysats de protéines. Les plus récents traitent de l'hydrolyse des protéines par voie enzymatique tandis que les plus anciens décrivent l'hydrolyse alcaline des protéines.

Les procédés décrits illustrent la grande variabilité des conditions opératoires utilisées ; par exemple des durées d'hydrolyses courtes, ou au contraire très longues.

Le brevet GB 705489 est ainsi relatif à l'hydrolyse de protéines de cacahuète par de la soude.

Le traitement est effectué dans de l'eau à 82°C pendant 30 minutes, puis neutralisation avec de l'acide chlorhydrique. Il est alors obtenu des hydrolysats dits « foisonnants ».

Le brevet US 2999753 décrit quant à lui des hydrolysats alcalins de protéines végétales obtenus après traitement à pH 10,7-10,8 et à une température comprise entre 37 et 80°C, pendant 8 à 20 heures.

Dans le brevet US 2.522.050, il est même décrit un procédé de fabrication d'agents moussants par l'hydrolyse alcaline d'une protéine de soja ou de lait dans une solution aqueuse contenant de l'hydroxyde de calcium ou de l'hydroxyde de magnésium à un pH d'au moins 10 et à une température dite bien inférieure à 100°C (35 - 40°C) pendant au moins deux jours afin d'obtenir un produit ayant des propriétés moussantes satisfaisantes.

Il est ainsi à noter que ce document recommande :

- de choisir des températures de réaction inférieures ou égales à 40°C,
- de préférer des hydroxydes de calcium ou de magnésium, et surtout des hydroxydes de calcium afin d'obtenir les hydrolysats de protéines présentant les meilleures propriétés moussantes,
- de privilégier de longues durées de réaction.

C'est ainsi que dans le brevet GB 670.413, il est décrit un procédé pour la préparation d'agents moussants par hydrolyse de protéines à température ambiante pendant une période d'au moins 24 heures, hydrolyse réalisée à l'aide d'un hydroxyde de calcium.

Il est également mentionné dans ce brevet que s'il est possible d'hydrolyser les protéines à une température plus élevée, de l'ordre de 100°C et plus, cela se fera au détriment des propriétés moussantes recherchées.

Cependant, si l'hydrolyse à l'hydroxyde de calcium est souvent conseillée, elle génère des hydrolysats de très mauvais goût, ce qui constitue un sérieux handicap. En général ils sont en effet crayeux et amers, et en outre ont un goût soufré et caoutchouteux.

L'augmentation de la température pendant l'hydrolyse à l'hydroxyde de calcium peut réduire le temps de réaction, mais augmente la formation de ces arômes indésirables.

Pour tenir compte de tous ces pré-requis, le brevet EP 1.327.390 propose alors une méthode pour aérer un produit alimentaire contenant des hydrates de carbone en utilisant un hydrolysat de protéine végétale comme agent moussant, hydrolysat obtenu en soumettant cette protéine végétale à une hydrolyse dans une solution aqueuse avec un pH d'au moins 10.

Cet hydrolysat alcalin présente alors une longueur moyenne de chaîne peptidique de 5 à 20 acides aminés et une quantité d'acides aminés libres inférieure à 15 % en poids de la matière totale dérivée des protéines.

Cependant, pour parvenir à ce résultat, le procédé original d'hydrolyse alcaline décrit dans le brevet EP 1.327.390 nécessite de combiner des hydroxydes alcalins et des hydroxydes alcalinoterreux, i.e. la combinaison d'au moins un hydroxyde alcalin tel que NaOH ou KOH avec au moins un hydroxyde alcalinoterreux, par exemple $Ca(OH)_2$ ou $Mg(OH)_2$.

Une hydrolyse alcaline efficace, selon les termes de ce brevet EP 1.327.390, ne peut donc être obtenue que par une conduite d'hydrolyse tout à fait particulière.

Dans la demande de brevet internationale WO 95/25437, il est décrit une méthode pour produire des hydrolysats de protéines végétales avec une coloration améliorée par l'extraction des protéines contenues dans des farines végétales à un pH au-delà du pH isoélectrique de la protéine, éventuellement en présence d'adsorbants, et l'hydrolyse de la protéine ainsi obtenue en présence d'adsorbants avec des alcalis, des acides et / ou des enzymes de manière dite « connue en soi ».

Les hydrolysats de protéines ainsi obtenus peuvent alors être utilisés notamment comme agents tensio-actifs.

Le procédé recommandé pour l'hydrolyse alcaline consiste en fait à traiter une fois encore la suspension aqueuse alcaline des isolats de protéines avec des oxydes ou hydroxydes de calcium.

Il faut alors filtrer la solution obtenue pour éliminer les résidus.

Pour obtenir les peptides en tant que tels, il faut encore traiter les peptides sous forme de sels de calcium avec de la soude ou de la potasse, puis éliminer le calcium résiduel, par exemple sous forme de sulfate de calcium.

La séparation des sels peu solubles doit finalement être effectuée en présence d'adjuvants de filtration sur filtre et filtres-presses.

Les hydrolysats ainsi obtenus, après concentration, ont un poids moléculaire moyen variant de 100 à 30 000 daltons, de préférence 100 à 10 000 daltons et surtout de 2000 à 5000 daltons et une teneur en matière sèche de 5 à 50 % en poids.

Dans le brevet EP 1.909.592, il est décrit un procédé pour la production d'hydrolysats de protéines enrichis en manganèse, destinées en zootechnie comme sources contrôlées d'apports en manganèse, permettant ainsi d'éviter le surdosage dans le régime alimentaire pour l'animal, et de réduire tous les phénomènes d'interférence avec d'autres composants de la ration alimentaire.

Pour obtenir ces hydrolysats de protéines riches en manganèse, il était déjà décrit dans l'état de la technique le traitement, par exemple à la chaux dans certaines conditions de pression et de température, des tissus conjonctifs dérivant de la peau traitée dans une tannerie.

Le brevet EP 1.909.592 propose plutôt d'obtenir les hydrolysats de protéines enrichis en manganèse en employant, comme matière de départ, une matière organique végétale classique, et en la soumettant notamment à un traitement avec de la chaux.

L'enrichissement en manganèse de ces protéines est alors effectué par le traitement des sels de calcium des hydrolysats de protéines avec des sulfates de manganèse ou des sels autres de manganèse à températures élevées, solubilisées préalablement dans des solutions d'acide sulfurique.

Il faut encore précipiter les sels de calcium résiduels par du bicarbonate d'ammonium, bicarbonate de sodium ou directement avec du dioxyde de carbone et/ou des agents précipitants autres, comme, par exemple, l'acide oxalique et l'acide phosphorique.

Il résulte de tout ce qui précède qu'il demeure encore un besoin de disposer d'un procédé industriel peu coûteux et simple à mettre en oeuvre, en d'autres termes économiquement et industriellement viable.

L'invention a donc pour but de remédier aux inconvénients des hydrolysats et procédés de l'état de la technique et la société Demanderesse a eu le mérite de trouver, après de nombreux travaux, que ce but pouvait être atteint en proposant un procédé de préparation à l'échelle industrielle d'hydrolysats alcalins de protéines végétales à haute matière sèche.

Ce procédé de préparation d'hydrolysats alcalins de protéines végétales selon l'invention comprend les étapes suivantes :

1) mettre les protéines végétales en suspension dans de l'eau de manière à ce qu'elles soient :

- à une concentration comprise entre 15 et 30 % en poids / sec,
- à une température comprise entre 70 et 80 °C et
- à un pH compris entre 9,5 et 10,5 par ajout d'un hydroxyde alcalin choisi dans le groupe constitué de l'hydroxyde de sodium et de l'hydroxyde de potassium, de préférence de l'hydroxyde de potassium,

2) laisser incuber ladite suspension pendant 10 à 15 heures, de préférence pendant 12 heures, à une température comprise entre 70 et 80 °C et à un pH compris entre 9,5 et 10,5,
3) neutraliser ladite suspension chauffée à l'aide d'un acide minéral, de préférence de l'acide chlorhydrique,
4) sécher la suspension neutralisée de manière à obtenir l'hydrolysat alcalin.

La première étape du procédé conforme à l'invention consiste à mettre les protéines végétales en suspension dans de l'eau de manière à ce qu'elles soient à une concentration comprise entre 15 et 30 % en poids / sec, à une température comprise entre 70 et 80 °C et à un pH compris entre 9,5 et 10,5 à l'aide d'un hydroxyde alcalin choisi dans le groupe constitué de l'hydroxyde de sodium et de l'hydroxyde de potassium, de préférence de l'hydroxyde de potassium.

A l'échelle industrielle, il est délicat de manipuler des protéines végétales à une telle matière sèche.

Cette mise en suspension peut nécessiter de 12 à 20 heures d'incorporation des différents ingrédients du mélange.

Comme il sera exemplifié ci-après, la société Demanderesse recommande de préchauffer l'eau alcalinisée et d'y incorporer ensuite progressivement les protéines végétales, jusqu'à atteindre ladite matière sèche.

La deuxième étape du procédé conforme à l'invention consiste à laisser incuber ladite suspension pendant 10 à 15 heures, de préférence pendant 12 heures, à une température comprise entre 70 et 80°C, de préférence de l'ordre de 75°C et à un pH compris entre 9,5 et 10,5.

L'ajustement du milieu réactionnel à un pH de l'ordre de 10 permet d'obtenir les produits présentant le meilleur comportement en termes de solubilité et de capacité émulsifiante (ci-après « CE »).

Quant à la basicité, elle est amenée uniquement par des hydroxydes de métaux alcalins, de préférence des hydroxydes de sodium (NaOH) ou des hydroxydes de potassium (KOH).

On n'utilisera donc pas des hydroxydes de métaux alcalino-terreux tel que l'hydroxyde de calcium.

Testée de 55 à 90°C, la température de réaction a été finalement choisie à une valeur comprise entre 70 et 80°C, de préférence de l'ordre de 75°C.

Quant à la durée de la réaction, elle est fixée entre 10 et 15 heures.

La société Demanderesse en procédant de la sorte va à l'encontre de préjugés de l'état de la technique, au sens où :

- le temps de réaction proprement dit est court, de l'ordre de 12 heures, facilement industrialisable : il n'est donc plus nécessaire d'effectuer la réaction en 24 à 48 heures, voire plus,
- il n'est pas proposé d'utiliser des hydroxydes de calcium ou de magnésium. Au contraire, la société Demanderesse a trouvé que l'usage de la chaux impactait négativement la qualité des hydrolysats de protéines obtenus.

La troisième étape du procédé conforme à l'invention consiste à neutraliser le pH à l'aide d'un acide minéral, de préférence de l'acide chlorhydrique.

Par exemple, de l'acide chlorhydrique à 1N est ajouté au milieu, sous agitation, afin d'ajuster le pH à 7.

La quatrième et dernière étape du procédé conforme à l'invention consiste à sécher l'hydrolysat alcalin ainsi obtenu.

Par exemple, le produit est séché sur un atomiseur à turbine (notamment de type NIRO) fonctionnant en co-courant. Cet atomiseur ne possède pas de système de recyclage des fines ; il s'agit donc d'un séchage en simple effet. L'air entrant dans la tour d'atomisation est chauffé à 180°C. Le débit d'alimentation de la tour est réglé de telle manière à avoir l'air en sortie de tour à une température de l'ordre de 80 à 85°C. Ces conditions d'atomisation conduisent à une poudre ayant 6 à 7% d'humidité résiduelle.

La mise en oeuvre du procédé selon l'invention permet d'obtenir des hydrolysats alcalins de protéines végétales présentant de remarquables caractéristiques fonctionnelles.

Ces hydrolysats alcalins de protéines végétales sont ainsi caractérisés par :

- une valeur de solubilité dans l'eau à pH 7,5 comprise entre 60 et 100%, de préférence entre 80 et 98%,
- une capacité émulsifiante comprise entre 60 et 90%, de préférence 65 et 85%,
- une longueur moyenne de chaîne peptidique comprise entre 10 et 20 aminoacides.

Les hydrolysats alcalins obtenus par le procédé conforme à l'invention sont caractérisés par leur solubilité, déterminée selon un test A.

Ce test A consiste à déterminer la teneur en matières solubles dans l'eau à pH 7,5 par une méthode de dispersion d'une prise d'essai de l'échantillon dans de l'eau distillée et analyse du surnageant obtenu après centrifugation.

Dans un bêcher de 400 ml, on introduit une prise d'essai d'exactement 2 g d'échantillon et un barreau aimanté (par exemple référencé sous le N°ECN 442-4510 par la société VWR). On tare le tout puis on ajoute 100 g d'eau distillée à 20°C ± 2°C.

On ajuste le pH à 7,5 avec HCl 1N ou NaOH 1N et on complète à 200 g exactement avec de l'eau distillée.

On agite pendant 30 minutes puis centrifuge 15 minutes à 3000g.

Après centrifugation, on prélève exactement 25 g de surnageant dans un cristallisoir préalablement taré. On place à l'étuve à 103°C jusqu'à masse constante.

La solubilité aqueuse est calculée grâce à l'équation suivante :

$$\text{Solubilité} = \frac{(m1-m2) \times 200 \times 100}{25 \times 2}$$

avec m1 = masse en g du cristallisoir après séchage
m2 = masse en g du cristallisoir vide

Les hydrolysats alcalins obtenus par le procédé conforme à l'invention présentent alors une solubilité comprise entre 60 et 100%, de préférence comprise entre 80 et 98%.

Les hydrolysats alcalins obtenus par le procédé conforme à l'invention sont également caractérisés par leur capacité émulsifiante, déterminée selon un test B.

Ce test consiste à déterminer la Capacité Emulsifiante (ci-après « CE ») correspondant au pourcentage de « crème » d'émulsion formée stable après centrifugation en fonction d'une certaine concentration en protéines et en huile, à l'aide d'un homogénéisateur (en particulier de marque POLYTRON et de type PT 45-80), avantageusement muni d'une broche (notamment de marque Easy-clean référence B99582 / société Bioblock).

De manière plus précise, ce test consiste à :

- Dans un pot de 2 l de forme haute (i.e. présentant par exemple 23,5 cm de haut et 11,5 cm de diamètre), préparer une solution d'hydrolysats alcalins de protéines équivalant à 2,0 % de protéines (masse/volume en protéines N x 6,25) dans 250 ml d'eau déminéralisée,
- Introduire un barreau aimanté (notamment référencé sous le N°ECN 442-4510 par la société VWR),
- mélanger les hydrolysats alcalins de protéines pendant 10 minutes sur un agitateur magnétique, par exemple de marque IKA® RCT Classic, à la vitesse maximale de 1100 t/min,
- Préparer 250 ml d'huile de colza alimentaire,
- Retirer le barreau aimanté,
- Plonger la broche du POLYTRON (PT 45-80) dans la solution, à mi-hauteur de la solution d'hydrolysats alcalins de protéines.
- Positionner la vitesse de rotation à 5,5 (entre 5 et 6) soit entre 15 200 et 15 450 rpm,
- Lancer l'agitation et verser les 250 ml d'huile de colza en 1 minute,
- Transvaser l'émulsion dans un bécher,
- Peser 2 fois exactement 35 g de l'émulsion dans 2 tubes gradués à centrifuger de 50 ml,
- Centrifuger à 1500 g pendant 5 minutes, à 20°C,
- Mesurer le volume de la « crème » d'émulsion après centrifugation,
- Mesurer le volume total après centrifugation (culot + eau + crème d'émulsion),
- Vérifier la répétabilité entre les 2 tubes et entre 2 essais identiques.

La Capacité Emulsifiante sera déterminée par calcul, grâce à l'équation suivante :

$$CE = \frac{\text{Volume de crème d'émulsion après centrifugation}}{\text{Volume total après centrifugation}} \times 100$$

Les hydrolysats alcalins obtenus par le procédé conforme à l'invention présentent alors une valeur de CE comprise entre 60 et 90 %, de préférence 65 et 85 %.

Les hydrolysats alcalins obtenus par le procédé conforme à l'invention sont enfin caractérisés par leur longueur moyenne de chaîne peptidique, déterminée selon un test C.

Ce test C consiste à calculer la longueur moyenne de chaîne comme suit, où

- NT = azote total
- NAT = azote aminé total
- AAL = acides aminés libres
- F = teneur moyenne en azote des acides aminés de la protéine considérée
- LMCP = longueur moyenne des chaînes peptidiques
- AAP = nombre d'acides aminés peptidiques
- CP = nombre de chaînes peptidiques

NT est alors déterminé selon la méthode de Dumas A., comme citée par BUCKEE, 1994, dans Journal of the Institute of BREWING, 100, pp 57-64, méthode connue de l'homme de l'art et exprimé en mmol/g.

NAT est déterminé par formol titration dite de Sorensen, connue également de l'homme de l'art et exprimé en mmol/g.

AAL est déterminé par HPLC et exprimé en mmol/g.

Selon les protéines considérées, la valeur de F (exprimée en mol/mol) est la suivante :

- protéines de pois : 1,29

- protéines de pomme de terre : 1,25
- protéines de maïs : 1,24

La longueur moyenne de chaînes est égale au nombre d'acides aminés peptidiques divisé par le nombre de chaînes peptidiques, soit :

$$LMCP = \frac{AAP}{CP}$$

avec : $AAP = \left(\frac{NT}{F}\right) - AAL$

et $CP = NAT - F \times AAL$

Les hydrolysats alcalins obtenus par le procédé conforme à l'invention présentent alors une longueur moyenne de chaîne peptidique comprise entre 10 et 20 aminoacides, ce qui traduit le caractère partiellement hydrolysé des protéines.

Comme il sera exemplifié ci-après, les hydrolysats alcalins obtenus par le procédé conforme à l'invention sont préparés à partir de protéines végétales choisies dans le groupe constitué des protéines du pois, des protéines de la pomme de terre et des protéines du maïs, de préférence des protéines de pois.

Les hydrolysats alcalins de protéines obtenus par le procédé conforme à l'invention sont également caractérisés par :

- leur richesse (exprimée en Nx6,25),
- leur qualité organoleptique,
- leur capacité moussante (ci-après : « CM »), et
- leur degré d'hydrolyse.

La richesse des hydrolysats, déterminée par la méthode connue en soi de l'homme de l'art, est élevée, i.e. comprise entre 60 et 95%, préférentiellement comprise entre 80 et 85%.

Quant à la qualité organoleptique des hydrolysats alcalins obtenus par le procédé conforme à l'invention, elle a été déterminée notamment sur les hydrolysats alcalins de protéines de pois.

Les hydrolysats alcalins des protéines de pois obtenus par le procédé conforme à l'invention présentent en effet une qualité organoleptique tout à fait satisfaisante, en comparaison avec les protéines de pois à partir desquelles ils sont préparés.

La capacité moussante est quant à elle déterminée selon le test D de la manière suivante.

Une mousse est une dispersion de bulles de gaz (azote, gaz carbonique, air) dans une phase continue (renfermant des protéines ou leurs hydrolysats) liquide ou solide produite par agitation mécanique.

Dans un bécher de 250 ml de forme haute (i.e. présentant par exemple 12 cm de haut et 6 cm de diamètre), on prépare une solution de 40 ml à 2% (masse/volume en protéines Nx6,25) des hydrolysats de protéines avec de l'eau déminéralisée.

On introduit un barreau aimanté (référencé notamment sous le N°ECN 442-4510 par la société VWR).

On hydrate les hydrolysats de protéines pendant 10 minutes sur un agitateur magnétique, par exemple de marque IKA® RCT Classic, à la vitesse de 1100 tours/min.

On retire le barreau aimanté.

On mesure le volume total avant foisonnement.

On plonge la broche (par exemple référence G45M) d'un homogénéisateur, tel que celui de marque IKA® Werke et de type ULTRA TURRAX® T50 basic, dans la solution d'hydrolysats de protéines à mi-hauteur de ladite solution.

On positionne la vitesse de rotation sur la position « 5 » et laisse sous agitation 1 minute.

On transvase la totalité du volume dans une éprouvette graduée de 100 ml.

On mesure le volume total après foisonnement.

La capacité moussante est alors donnée par la formule suivante :

$$CM = \frac{\text{Volume total de mousse après foisonnement}}{\text{Volume total avant foisonnement}} \times 100$$

La perte de stabilité est exprimée par la perte de volume de mousse après 30 minutes, exprimée en pourcentage du volume de mousse initial.

Les hydrolysats alcalins obtenus par le procédé conforme à l'invention présentent alors une valeur de CM comprise entre 150 et 250 %.

Ces hydrolysats alcalins présentent par ailleurs un degré d'hydrolyse (DH) avantageusement compris entre 5 et 9. Celui-ci peut être déterminé par calcul, selon la formule suivante :

$$DH = [(NAT \%) \times 100]/ [Azote\ protéique]$$

où :

NAT est l'azote aminé total déterminé par formol titration dite de Sorensen, connue de l'homme de l'art, et exprimé en mmol/g,
l'azote protéique est exprimé en N x 6,25, et mesuré selon la méthode bien connue de l'homme du métier.

Les hydrolysats alcalins obtenus par le procédé conforme à l'invention peuvent être avantageusement utilisés comme agents émulsifiants dans les domaines des industries alimentaires humaines ou animales, pharmaceutiques, cosmétiques et industries chimiques, en particulier dans le domaine alimentaire.

Ils peuvent également être utilisés dans les industries de la fermentation, des matériaux de construction, des matières plastiques, des matières textiles, du papier et du carton.

Enfin, la présente invention a pour objet des compositions, de préférence des compositions alimentaires, contenant les hydrolysats alcalins tels que décrits ci-dessus.

Ces compositions alimentaires sont de préférence des émulsions émulsifiées avec lesdits hydrolysats alcalins.

D'autres caractéristiques et avantages de l'invention apparaîtront à la lecture des exemples non limitatifs décrits ci-dessous.

### EXEMPLES

### Exemple 1 : Préparation d'hydrolysats de protéines de pois

Pour préparer les hydrolysats alcalins de protéines de pois par le procédé conforme à l'invention, on procède de la manière suivante :

1) t0 : mise en chauffe de 25 m³ d'eau à 75°C
2) t0 + 3 heures : ajout de 300 l d'hydroxyde de potassium à 10 %
3) t0 + 4 heures à t0 + 10 heures : incorporation de 6.300 kg de protéines de pois et de l'hydroxyde de potassium à 10 % de manière à atteindre un pH de 10
4) t0 + 10 heures à t0 + 15 heures : incorporation des 700 kg de protéines de pois restantes
5) t0 + 15 heures à t0 + 27 heures : incubation à 75°C avec ajout de l'hydroxyde de potassium pour mener l'hydrolyse proprement dite
6) à t0 + 27 heures : neutralisation avec de l'acide chlorhydrique à 33 % (soit 242 l d'HCl)
7) à t0 + 28 heures : séchage en tour d'atomisation

Le produit est séché sur un atomiseur à turbine de type NIRO fonctionnant en co-courant. Cet atomiseur ne possède pas de système de recyclage des fines ; il s'agit donc d'un séchage en simple effet. L'air entrant dans la tour d'atomisation est chauffé à 230°C.

Le débit d'alimentation de la tour est réglé de telle manière à avoir l'air en sortie de tour à une température de l'ordre de 90°C, i.e. ici de 2.800 à 3.000 l/h.

Ces conditions d'atomisation conduisent à produire une poudre ayant de l'ordre de 6 % d'humidité résiduelle.

Les résultats obtenus figurent dans le tableau I suivant :

Tableau I

|  | Protéine native avant hydrolyse | Hydrolysat obtenu par le procédé selon l'invention |
|---|---|---|
| Matière sèche (%) | 94,2 | 94 |

(suite)

| | Protéine native avant hydrolyse | Hydrolysat obtenu par le procédé selon l'invention |
|---|---|---|
| Solubilité pH 7,5 (%) | 36,1 | 95,7 |
| CE (%) | 70 | 84 |
| Longueur moyenne de chaîne peptidique | 18 | 11 |
| Degré d'hydrolyse | 4,5 | 7,3 |
| Richesse (%) | 81,5 | 75,6 |
| CM (% d'augmentation de volume après foisonnement par rapport au volume initial) | 97 | 90,5 |

Les protéines de pois hydrolysées par le procédé selon l'invention possèdent une longueur moyenne de chaîne peptidique de 11.

L'hydrolyse des protéines de pois selon l'invention permet d'augmenter la solubilité et la capacité émulsifiante de manière significative.

De plus, le pouvoir moussant est amélioré.

Les hydrolysats de protéines de pois obtenus par le procédé selon l'invention présentent des propriétés de solubilité, de capacités émulsifiantes et moussantes supérieures aux propriétés des mêmes protéines avant hydrolyse.

**Exemple 2 : Utilisation des hydrolysats obtenus par le procédé selon l'invention pour l'encapsulation d'huiles**

De l'huile de poisson est encapsulée par atomisation d'une émulsion à 45% de MS et à pH = 8.

L'huile représente 15% de la matière sèche, le support d'encapsulation et l'émulsifiant varient selon les formules.

L'émulsion est réalisée selon le mode opératoire suivant :

- Dissoudre le support d'encapsulation et l'émulsifiant dans de l'eau déminéralisée chauffée à 80°C (= solution encapsulante)
- ajuster le pH à 8 à l'aide de NaOH 1N
- agiter pendant 20 minutes
- peser l'huile 5 minutes avant la fin de cette période pour éviter l'oxydation
- Réaliser l'émulsion à l'aide d'un homogénéisateur POLYTRON de type PT 45-80 (muni d'une broche Easy-clean référencée B99582 chez Bioblock), vitesse de 9000 rpm : pour cela, verser l'huile dans la solution encapsulante (préparée aux étapes 1 et 2) sous agitation en 2 minutes.
- Passer l'émulsion obtenue sur homogénéisateur haute pression à 160 Bar (30 Bar au 2$^{ème}$ étage et compléter jusqu'à 160 Bar pour le premier étage)
- Placer alors l'émulsion en agitation en maintenant la température proche de 50°C

L'émulsion ainsi préparée est atomisée sur un atomiseur simple effet (sans recyclage des fines particules). La température de l'air entrant est à 185°C ; le débit est réglé de façon à avoir T° sortie = 90°C.

Les poudres obtenues sont caractérisées par leur teneur en eau, l'activité de l'eau (aw), le taux d'encapsulation et par l'état d'oxydation de l'huile.

Le taux d'encapsulation est mesuré par différence entre la matière grasse totale et la matière grasse extractible (quantité d'huile fixée par le support) :

$$\text{Taux d'encapsulation (\%)} = 100 - \left[ \frac{\text{\% lipides extractibles}}{\text{\% lipides totaux}} \right] \times 100$$

Les lipides sont déterminés par extraction au SOXHLET à l'hexane :

- Sur le produit tel quel pour les lipides extractibles,
- Sur le produit après hydrolyse pour les lipides totaux.

La stabilité à l'oxydation est déterminée selon la norme NF ISO 6886.

Le temps d'induction correspond au temps nécessaire pour oxyder un corps gras dans des conditions données (température, débit d'air, masse de produit).

On procède à l'atomisation d'émulsions à 45 % de MS et pH = 8 contenant :

- 15% d'huile de poisson,
- 1,2 ou 1,8 % d'émulsifiant : protéine de pois native / hydrolysat de protéines de pois de l'exemple 1,
- respectivement 83,5 % ou 83,2% de support :

   maltodextrine d'un DE 12 (GLUCIDEX® 12 commercialisé par la société ROQUETTE FRERES).

Les poudres atomisées ont une activité de l'eau de 0,1.

Leur teneur en eau est de 5% pour les essais avec 1,2% d'émulsifiant et de 4% pour les essais avec 1,8% d'émulsifiant.

Tableau II : taux d'encapsulation (%) et temps d'induction (h) des émulsions atomisées avec la maltodextrine de DE 12.

Tableau II

| Nature et teneur en émulsifiant | Taux d'encapsulation (%) | Temps d'induction (h) |
|---|---|---|
| 1,2% Protéines de pois natives | 78,3 | 6,0 |
| 1,2% Hydrolysats de protéines de pois obtenus par le procédé conforme à l'invention | 89 | 9 |
| 1,8% Protéines de pois natives | 83,2 | 6,7 |
| 1,8% hydrolysats de protéines de pois obtenus par le procédé conforme à l'invention | 92 | 13 |

Avec le support maltodextrine de DE 12, l'utilisation de l'hydrolysat de protéines de pois obtenu par le procédé conforme à l'invention à hauteur de 1,2% permet d'encapsuler jusqu'à 89 % d'huile contre 78,3 % avec la protéine de pois native.

L'huile a alors un temps d'induction de 9 h contre 6 h.

Pour les deux concentrations d'émulsifiant, le taux d'encapsulation est supérieur lorsqu'on utilise l'hydrolysat de protéines de pois obtenu par le procédé conforme à l'invention plutôt que la protéine de pois native.

De même, le temps d'induction est supérieur lorsqu'on utilise l'hydrolysat de protéines de pois obtenu par le procédé conforme à l'invention plutôt que la protéine de pois native.

L'huile s'oxyde donc moins rapidement.

**Revendications**

1. Procédé de préparation d'hydrolysats alcalins de protéines végétales **caractérisé en ce qu'**il comprend les étapes suivantes :

   1) mettre les protéines végétales en suspension dans de l'eau de manière à ce qu'elles soient

      - à une concentration comprise entre 15 et 30 % en poids / sec,
      - à une température comprise entre 70 et 80 °C et
      - à un pH compris entre 9,5 et 10,5 par ajout d'un hydroxyde alcalin choisi dans le groupe constitué de l'hydroxyde de sodium et de l'hydroxyde de potassium, de préférence de l'hydroxyde de potassium,

   2) laisser incuber ladite suspension pendant 10 à 15 heures, de préférence pendant 12 heures, à une température comprise entre 70 et 80 °C et à un pH compris entre 9,5 et 10,5,
   3) neutraliser ladite suspension chauffée à l'aide d'un acide minéral, de préférence de l'acide chlorhydrique,
   4) sécher la suspension neutralisée de manière à obtenir l'hydrolysat alcalin.

**Patentansprüche**

1. Verfahren zur Herstellung von Alkalihydrolysaten pflanzlicher Proteine, **dadurch gekennzeichnet, dass** es die folgenden Schritte umfasst:

   1) Suspendieren der pflanzlichen Proteine in Wasser, so dass sie vorliegen:

      - bei einer Konzentration, umfassend zwischen 15 und 30 Gew.-% Trockenmasse,
      - bei einer Temperatur, umfassend zwischen 70 und 80 °C und
      - bei einem pH-Wert, umfassend zwischen 9,5 und 10,5, durch Zusatz eine Alkalihydroxids, ausgewählt aus der Gruppe, bestehend aus Natriumhyroxid und Kaliumhydroxid, vorzugsweise Kaliumhyroxid,

   2) Inkubieren der Suspension für 10 bis 15 Stunden, vorzugsweise für 12 Stunden, bei einer Temperatur zwischen 70 und 80 °C und einem pH-Wert, umfassend zwischen 9,5 und 10,5,
   3) Neutralisieren der erwärmten Suspension mit Hilfe einer Mineralsäure, vorzugsweise mit Salzsäure,
   4) Trocknen der neutralisierten Suspension, um das alkalische Hydrolysat zu erhalten.

**Claims**

1. A method for preparing alkaline hydrolysates of plant proteins, **characterized in that** it comprises the following steps:

   1) placing the plant proteins in suspension in water such that they are

      - at a concentration between 15 and 30 dry wt%,
      - at a temperature between 70 and 80°C and
      - at a pH between 9.5 and 10.5, by addition of an alkali metal hydroxide chosen from the group consisting of sodium hydroxide and potassium hydroxide, preferably potassium hydroxide,

   2) allowing said suspension to incubate for 10 to 15 hours, preferably for 12 hours, at a temperature between 70 and 80°C and at a pH between 9.5 and 10.5,
   3) neutralizing said heated suspension by means of a mineral acid, preferably hydrochloric acid,
   4) drying the neutralized suspension to obtain the alkaline hydrolysate.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 705489 A
- US 2999753 A
- US 2522050 A
- GB 670413 A

- EP 1327390 A
- WO 9525437 A
- EP 1909592 A

**Littérature non-brevet citée dans la description**

- **DUMAS A.** BUCKEE. *Journal of the Institute of BREWING,* 1994, vol. 100, 57-64